# EUROPEAN PATENT APPLICATION

(11) **EP 2 348 456 A2**
(43) Date of publication of application: **27.07.2011**
(21) Application number: 11000459.5
(22) Date of filing: 21.01.2011
(51) Int. Cl.: G06K 9/20, G03B 7/26, G03B 15/03

(54) **Combined pattern recognizing camera and power supply for the camera**

(30) Priority: 22.01.2010 HU 1000039
(71) Applicant: Digital Recognition Systems Limited, Surrey Research Park Guildford Surrey GU2 7YG (GB)
(72) Inventor: The designation of the inventor has not yet been filed
(74) Representative: Mak, Andras

(57) **Abstract**

The invention relates to a combined pattern recognizing camera, especially made for the recognition of license plates. The camera has at least one optical imaging component, there is an optoelectronic image converter attached to this and an electronic control module. The optical imaging component has narrow angle of view (10/20/30 degrees) with a large depth of field (3.4) and generates a sharp image from a minimum distance 412.5/1m to infinity.

## Description

### Technical field

The invention relates to a combined pattern recognizing camera especially made for the recognition of license plates. The camera has at least one optical imaging component, an optoelectronic image converter, an electronic control module and a power supply for the camera.

### Background art

The optical recognition of various shapes is known and applied in several fields. The identification of vehicles, for instance based on their license plates, is often necessary in vehicular and other kind of traffic in several cases. This kind of scope can be the identification of stolen motor vehicles, the automatic operation of parking systems, the automatic control of speed limit and toll payment etc. For these adaptations the license plate is being detected through optical imaging devices which transform the optical signal into electric - expediently digital - signals. The license plate of the vehicle is identified with the processing of electric signals. During this kind of automatic number plate recognition (ANPR) several problems may occur which make the identification more difficult. In many cases such difficulties may occur that the fast moving vehicles have to be identified, even when there are low light circumstances. Because of the difficulty of optical detection and the inaccuracy of pattern recognition often no satisfactory results can be achieved, and in these cases the identification is wrong or is not possible at all.

In order to compensate the changing or low light circumstances artificial light - for instance InfraRed - sources are used. This solution is presented for example in a document - about a video surveillance camera - numbered US 2007/0080306 A1. The video camera and its integral electronics are placed in the same case. On the front of it a proper sized aperture is placed for the camera lens. They adapt IR LEDs (infrared light emitting diodes) as supplementary lighting for the camera, which can be found on the front around the camera lens. The solar detector of this invention senses the level of natural light, which makes it possible that the supplementary lighting is only turned on when visible light is insufficient to obtain a discernable picture. This invention comprises a longitudinal case and a relatively small front side on which the camera lens and the LED row are placed. Such a solution permits only the use of a relatively small number of LEDs, which limits the light intensity of supplementary lighting, consequently, the effectiveness and the range of the illumination. In the interest of increasing the light intensity of the IR LEDs the US 2008/0266445 A1 document suggests a solution in which the front - on which the IR LEDs and camera lens are placed - around the IR LEDs are set up with reflective cavities. Though this embodiment increases the emitted light output - produced by the IR LEDs-, but because of the cavities the IR LEDs take up more room, thereby limiting the numbers of the LEDs.

In case of using more IR LEDs it can be a problem that they produce and egress relatively much heat to their environment, which can disturb the operation of the electronics - placed in the same case- and may reduce the expected lifespan of this device. In order to avoid this problem the document of US 2008/0136333 A1 offers a solution in which the IR LEDs are irrespectively placed of the case of camera and of the electronics in a separate case. Concerning this solution the disadvantages are the complicated design, the large size and the additional work of manufacturing and local installation.

If they combine the infrared light source with an IR filter then advantageously the less dispersing IR light is used for imaging which can fade the infrared light of the sun away - provided its energy is large enough- and which makes even in daylight better quality pictures possible (for example the retroflective number plate will be brighter than the background). As it is described in the document of US4647975 the dynamic realm is often increased with the usage of sequential shutter speed (exposure time) so that for the consecutive frames different exposure times are employed.

The optical detective components used by the optical or video surveillance and pattern recognizing systems have usually fixed focal-length and small depth of field so they are only able to take sharp and capable pictures for image processing from specified distance. Lenses with large depth of fields are usually wide-angled, but they emit only little light, therefore they can't be utilized by license plate recognizing and identifying systems. Either lenses which can produce high quality picture or AF lenses may be considered by these systems.

However, the usage of large lenses would increase the cost and size of the recent system, which also cause difficultics in their adaptation.

In case of mobile applications next to the optical detection we can have a problem with the remote power supply of the camera and with the transmission of video signal to the processing place. In connection with the power supply the primarily occurring problem is that voltage within the supply wires is proportional to the length of the wires, therefore in long (for instance longer than 10 metres) wires the power loss can reach a significant level. Furthermore, another difficulty is that the power supply and video signals are transmitted by the same cable and the noise of supply voltage interferes with the video signal as a result damages the quality of it. The operation of IR LEDs should be based on impulses because of their large power consumption, notwithstanding this solution significantly increases the noise level of the supply voltage.

### Disclosure of the invention

The aim of this invention is giving such a combined pattern recognizing camera which is able to make a good quality picture even in low light circumstances thus mending the pattern recognition - for example the licence plate recognition - and identification reliability. At the same time it has a simple small structure which can cheaply produced.

Furthermore the aim of this invention is giving a camera and a power supply which on the one hand ensures with high luminous intensity and depth of field the good quality of the optical signal on the other hand assures the permanent supply voltage with adjustable power supply aside from the distance of the power supply unit, furthermore it reduces the noise of the supply voltage and hereby also the video signal's noise.
The aim of the invention can be reached the most average way with a camera where the optical imaging component has a narrow angle of view (10/20/30 degrees) with a large depth of field and generates a sharp image from a minimum distance 4m to infinity. By using a camera lens like this the recognizing object, for example a licence plate, can be replicated in the detection range sharply so, that more captures can be made in a row, what is more it can be used in those kind of applications where the distance of the object is unknown or variable, for example a camera placed on a moving car.

By a beneficial version of the invention the optical imaging component has a narrow angle of view at best 20 degrees with a large depth of field and generates a sharp image from a minimum distance 2, 5 m to infinity
By an another version of the object the optical imaging component has a narrow angle of view at best 30 degrees with a large depth of field and generates a sharp image from a minimum 1m to infinity.
According to the invention the imaging optical component is an optimized three or six lens camera lens. Against the small size of this camera lens it has a high luminous intensity and against the narrow angle of view it has a large depth of field. Another advantage of the camera is that by the three lens version the detective camera lens can be formed from two uniform lens and a concave lens which is placed between them.
By an especially beneficial version the camera can be found in the same chamber with an electric unit and on the front of it there is a slot appropriate for the camera lens and on the free space next to the camera lens IR LEDs are placed, which are able to enlighten the object we want to recognize even is low light circumstances (even at night) for example licence plates when they don't have a retro reflective surface.
According to the invention it can be beneficial if the unit which supplies the camera (including LEDs) is placed outside the chamber and is attached to the chamber via a wire. In case of a remote supply like this the remote supply module and the chamber of the camera are bonded with standard twisted pairs containing cable (for instance cheap cat5 type) and on which apart from the supply voltage, video signals and other communication signals can be transferred.
The video signals can be transferred via this twisted pairs symmetrically, which mends the signal to noise ratio. As a result of it the cable can be used on a bigger transmission distance.

### Short description of the drawing

Further on the invention will be delineated in more details by the examples of the preferred embodiments, which can be seen in the enclosed block diagram, where
Fig. 1 is according to the invention the front-view of the camera with an IR camera lens and with other IR light sources,
Fig. 2 is according to the invention the front-view of the camera with a colourful lens and with an IR camera lens, and with more IR light sources,
Fig. 3 is according to the invention the side-view section of the camera,
Fig. 4 is according to the invention the block diagram of the electrical units of camera,
Fig. 5 is according to the invention the camera with the remote power supply unit, which belongs to it,
Fig. 6 is the conceptual sketch of the voltage regulator of the remote power supply unit,
Fig. 7 is the impulse control circuit of IR LEDs,
Fig. 8 represents typical signal forms of the circuit (mentioned in Figure 7),
Fig. 9 shows the conceptual sketches of the voltage multiplier and divider, which are used to the power supply,
Fig. 10 shows the conceptual sketches of the higher power voltage multiplier and divider, which are used to the power supply,
Fig. 11 is according to the invention the side-view section of the camera lens whose angle of view is 10 or 15 degrees, and
Fig. 12 is according to the invention the side-view section of the camera lens whose angle of view is 20 or 30 degrees.

### Detailed description of the preferred embodiment

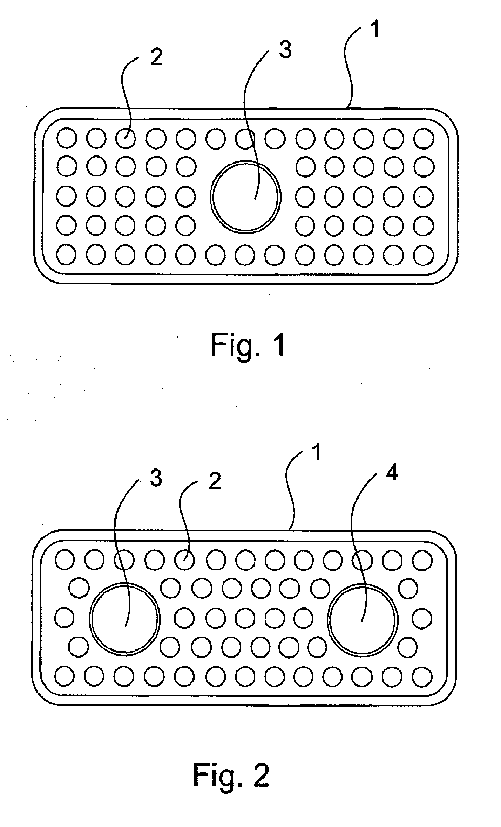

In a preferred embodiment shown in Fig. 1 according to the invention the camera has only one IR camera lens (2) and a plurality of IR light sources (2). The IR camera lens (3) and IR light sources (2), which are advantageously IR LEDs, are arranged in the same case. It has four lateral faces, one front and one back. In the middle of the front an expediently round aperture is formed for optical imaging component - for the camera lens - and around them IR light sources (2) are arranged, which are IR LEDs in this case. The IR LEDs completely cover the freestanding areas, which aren't covered by the camera lens. They are arranged in a way that as many as possible can be placed on the front. In this example of preferred embodiment the IR LEDS can be seen in horizontal and vertical arrays, but another for instance hexagonal arrangement can be beneficial, too. (Figure 2)

In the example of preferred embodiment shown in Fig. 2 according to the invention the camera have two optical imaging components, three or four camera lenses and more IR light sources (2). One of them for instance: the left one is an IR camera lens (3), which provides almost the same picture quality about the objects, which are enlightened by IR light sources (2), at any time of the day and besides any kind of natural lighting. To the IR camera lens (3) logically an optoelectronic converter (CCD) is needed whose real resolution is significantly higher than that of an optoelectronic coloured image converter, which has the same pixel size and surface. The second, four camera lenses on the right hand side can obtain coloured pictures in normal morning light. To this camera lens (4) belongs of course an optoelectronic coloured image converter. Naturally, the second four camera lenses can be IR lenses, too. In this case we may expediently choose two camera lenses with different visual angles or optical axis. In case of using different visual angles, high resolution images can be produced from an observed object by using narrower angle view from greater distance or by using wider angle view from smaller distance. With the ten-degree angled camera lens we can expediently create sharp, high resolution images from 5-20 metres, with the twenty-degree angled one from 2, 5-10 metres and with the thirty-degree angled one from 1-5 metres, because the ten-degree angled one may already generate sharp image from more than 4 metres, the twenty-degree angled one from more than 2, 5 metres and the thirty-degree angled one from more than 1 metres.

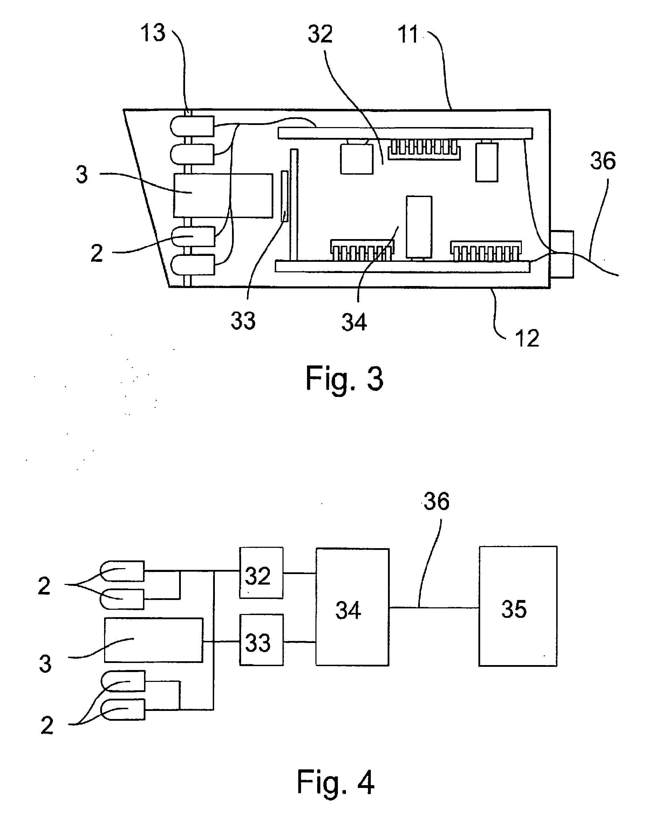

The side-view section of Fig. 3 shows the arrangements of optical and electrical components of the camera within the same case. As it can be seen the lid (11) of the case (on the left side) stands out better than the mainboard (12), which on the one hand covers the optical and optoelectronic components, which are fixed on the front (13), from rain and on the other hand from sun. The camera lens (3) is placed and fixed from moving within a larger transit slot and the IR LEDs (2) are positioned in smaller transit slots.
All outputs of the IR LEDs (2) can be paralleled and can be connected to the IR LED (32) control module. Notwithstanding, the IR LEDs can be divided into more groups or they can be controlled one by one. In case of the paralleled IR LED group the intensity of necessary lighting may be regulated by operating one or more groups at the same time. Even if all IR LEDs have parallel joints there is an opportunity to regulate the light intensity. In this case we expediently generate the control signal in the form of impulses where the light output is controlled by the duty cycle of impulses.

Behind the camera lens is the optoelectronic converter (33), in this case it is the CCD, which is connected to the video amplifier (34) and signal processing module. In order to provide power supply to video signals and electrical modules the supply voltage is transferred by the same cable (36), which expediently crosses the back of the common case. On the back a stuffing box is placed, through which the common cable (36) leads, which can relieve and seal the cable (36).

In Fig. 4 - the previously in Fig. 3 presented - optical and electrical modules, which form the camera, and the block diagram of the power supply (35) can be seen. In favour of simplicity in the figure only one camera lens (3) and four IR LEDs (2) are used, however, it is obvious for a technician that more camera lenses and IR LEDs would result in the same arrangement. Behind the camera lens or the optical imaging component (on the right side of the plan) an optoelectronic converter - in this case an CCD- is placed (33). The resolution of the CCD is expediently chosen so that the typical features of the detected object will be recognizable and identifiable. For this form of identification in case of number plates, which use in particular arabic and latin letters, relatively low resolution - for instance 0,5 Mpixel - is sufficient. Naturally, in case of more complicated objects, pictures or shapes the resolution of the CDD has to be higher. According to the invention in one of the examples of the preferred embodiment of camera we used a CDD whose resolution was 752(H) x 582(V) and its size was 0, 85 cm (1/3 coll). According to the invention the depth of field and visual angle of the camera lens is chosen so that the size of the detected optical image corresponds with the size of the CDD. The detected image is not larger so the luminous intensity of the camera lens can be maximized and is not smaller, therefore the resolution of the CDD can be completely utilized. The resolution of the camera lens is chosen in a way too, that it won't be significantly higher than the resolution of the CDD, which makes a small camera lens and economical production possible. With an optical imaging component, which is optimized on that kind of application and CDD, we can achieve smaller size, weight, and higher luminous intensity. Furthermore, easier and cheaper camera lens can be used.

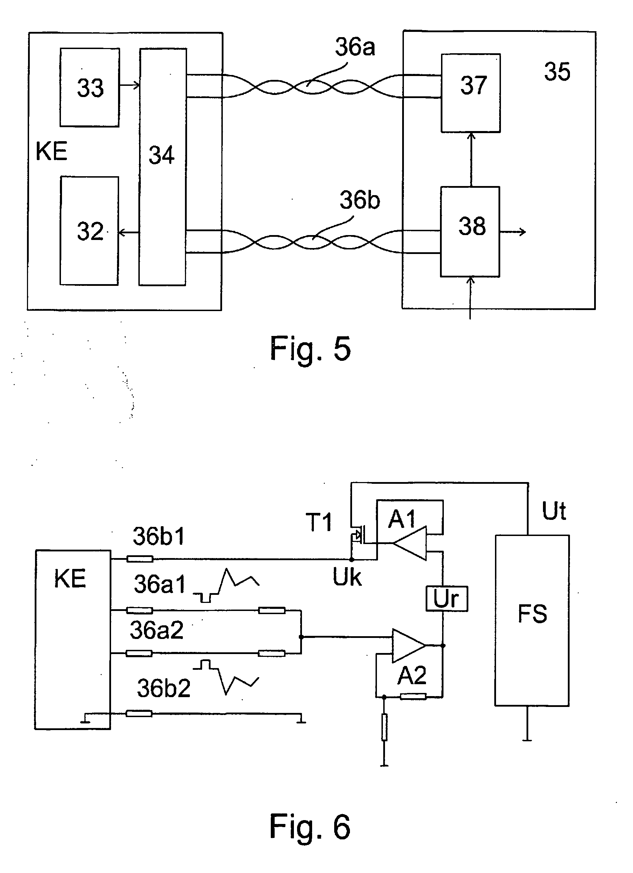

In Fig. 5 the electronic unit within the camera and the power module - which supplies the IR LEDs - is placed outside from the KE camera case in a remote power supply module (35). This remote power supply module (35) connects to the KE camera case through cables (36). The power supply (38) can be found in the remote power supply module (35), which produces the necessary internal and external supply voltage. The connecting cables are twisted pair cables advantageously arranged in a standardized cable, which is known as UTP cable. From the aspect of the invention for example the cat5 is a suitable UTP cable. The video signals can be symmetrically transmitted through the twisted pairs to the video receiver (37) - placed in the remote power supply module (35) -, which optimizes the signal to noise ratio. So the cable can be used from larger distance of transmission (even from 100 metres). Through this cable aside from supply voltage and video signals even communicational signs can be transmitted.

On behalf of better transparency in the drawing only two pairs (36a and 36b) can be seen where for instance 36a is used for the transmission of video signals and 36b for the transmission of supply voltage.

If the remote power supply module is placed further than 10 meters, we have to count with the voltage drop of the power supply cable. The changing of this voltage depends on the distance and on the load current. In case of a power supply cable, which bridges the greater distance and drives even video signal, we have to provide stable voltage on the consumer side (in this case on the side of the camera) and we have to ensure that the attenuation of cables is preferably the smallest. On behalf of achieving the wanted effective lighting we have to preferably choose high supply voltage in order to avoid the too high supply current, because the performance of the IR LEDs can be more than 300 W. In case of a preferred embodiment the nominal supply voltage of the camera is for example 36 V direct current (DC) to which on the power supply side we generate higher, expediently 48 V voltage (for the sake of the example we don't count with loss). In case of mobile applications the 12 V DC is usually at our service so the previously mentioned voltages can be generated by simple voltage multiplication. In this kind of example of preferred embodiment the control range of the supply voltage is 12 V, which is sufficient even from 100 meters even if we take into consideration the performance (300W) of the IR LEDs. If the load temporarily reduced or if the distance was smaller, the supply voltage on the side of the camera would increase, therefore we bind a variable resistor in series on the side of the power supply. Then we direct the resistor so that the supply voltage on the side of the camera will always be 36 V next to 0-12 V voltage drop. Naturally, it is possible to choose higher voltage on the side of the camera.

The schematic drawing of the circuit arrangement, which regulates the supply voltage, can be seen in Fig. 6. On the left side of the drawing is the electrical module of the KE camera, which is connected to the remote power supply module - placed on the right side - by four wires in the simplified example. The internal resistance of the wires is marked in the drawing. The twisted pairs, which were depicted in accordance with the reality by Figure 5, are not presented in Figure 6. In favour of better transparency only the markings hint at the connecting cables. So according to this 36b1 and 36b2 cables are supply voltage cables and as for 36a1 and 36a2, they are the video signal cables. In the example of preferred embodiment, which is shown in the drawing, the supply voltage (on the supply's side) is generated by the voltage multiplier (FS) within the power supply. For example it can generate from DC 12 V four times more so DC 48 V. The essence of the regulated remote power supply is that the supply voltage (on the camera's side) has constant value so for example DC 36 V In order to achieve this in this case 12 V voltage has to be jointly fallen on the variable resistor, which is bound in series, and on the permeable transistor (T1). The voltage, which is fallen on the supply cable, can change based on the length of the cable and can change in time during the operation, therefore the permeable transistor (T1) has to be directed so that range of voltage fallen on it is between 0-12V. Consequently, the supply voltage on the camera's side will stay at a constant value. (For instance at 36 V) For the regulation we use the DC level of the balanced video signals.
Provided the DC component of video signals is changing between 2 and 8 V, which depends on the load, and we double this level with an operational amplifier (A2) then we can feedback 4-16 V voltage to the regulation. For this voltage we add an Ur reference voltage (for example 32 V), which means 36-48 V voltage on the positive input of the operational amplifier (A1) what works as a comparator. The transitor (T1) is directed by the operational amplifier (A1) so that the output voltage will be 36 V in the Uk point. It can be seen that the Uk output voltage can be fixed in advance by choosing a reference voltage. Which means for instance that if Ur is 32V then Uk is 36 V (In reality, in a preferred embodiment - even counting with the losses - the video signal is changing between 2, 5V and 6, 5 V, Ur = 32 V so if we add the doubled signal, we can generate a 37 V - 45V output voltage.)

As we can see the camera can be arbitrarily positioned from the remote power supply module within a maximal distance (for example 100 metres). Furthermore, this module stabilizes the voltage, which incomes to the camera, without reference to the specified cable length and load.

As for the video systems it is essential that the video signal won't be disturbed by any unwanted electric effect, which may worsen the signal to noise ratio of the effective video signal. If the video signal is balanced and is being carried through twisted pairs from the camera to the place of processing, which can be even 100 metres away from the camera in the presented example of preferred embodiment, then an adequate protection is provided against the environmental noise.

The receiver work resistance (within the camera) of the camera amplifier was placed on the receiver (the remote power supply) thereby reducing the dissipation on the camera's side. The emergence of the cabled ground loop was prevented by using isolated electronics on the camera's side. So the video signal of wide frequency range (5Hz-5MHz) was protected from the noises, which were induced in the ground loop (maximum 100 metres).

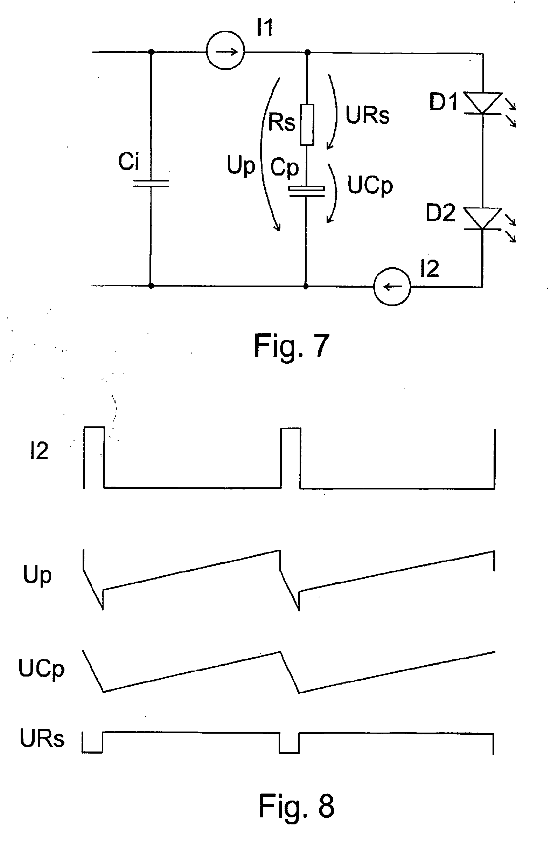

In addition because of the high current of IR LEDs it is suggested to operate them by impulses, which significantly increases the noise of the supply voltage. If the IR LEDs are powered by generator, this type of noise can be significantly reduced. The diagram of the circuit, which performs the control of the IR LEDs, can be seen in Figure 7. and the typical signal forms (which depend on time) of the circuit are presented in Figure 8.

The Ci capacitor filters the incoming 36 Vdc power supply from the radio frequency nuisances. The keeping of the I1 power on a constant value assures that the noises coming from the impulse operation don't get on the supply voltage. The infra flash, whose performance is above 300W and is used in impulse state and required energy (low electronic serial resistance) originates from the Cp electrolyte-capacitor.

The internal serial resistance of the Cp electrolyte-capacitor is really low, but can not be neglected from our point of view. The voltage of the Cp capacitor changing between Up=34V. to 36V according to the Up function of time because of the 12 power. The Up voltage consists of two parts, the UCp (sawtooth voltage), which originates from the capacity of the condenser, and the URs, which originates from the condenser's internal serial resistance. Consequently, the Up is the sum of these voltages (Up = UCp + URs). The 12 power getting through the IR LEDs is provided by an impulse generator. (its effect is that the U3max(the maximum voltage of the led reflector panel)is lower than 34V in each case). The value of I1=constant's value is the I2 RMS (Root Mean Square - average value). The frequency of the I2 power impulses is synchronized to the CCD picture fixation. In an example of the preferred embodiment 25 frames/sec beyond this two fields are obtained, for this the IR LEDs should be operated 50 times/sec, so the frequency of current pulse is 50Hz and the duty cycle of impulses is preferably between 1/10 and 1/2000.

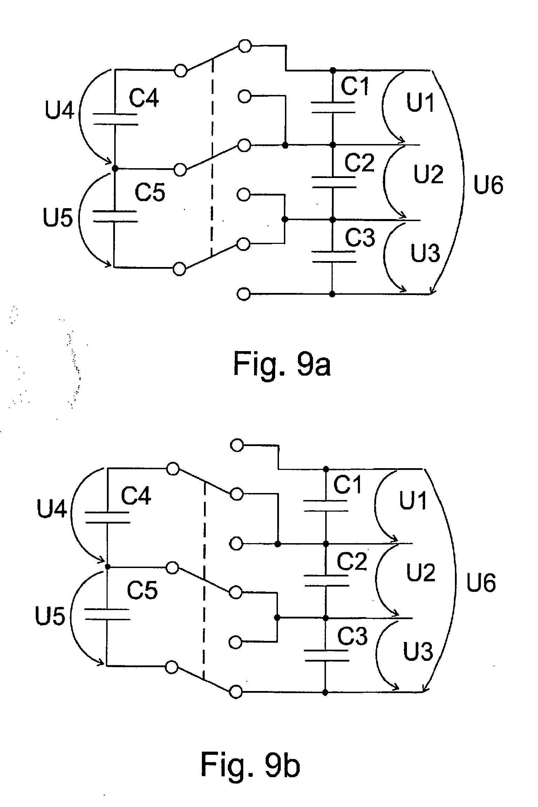

As a consequence of the IR LEDs impulse operation there is no need for transmitting the maximal performance between the remote power supply module and the camera module. On the wire, which contains twisted pairs, the loss that is caused by the power supply current can be reduced if we increase the transmitted voltage, and in proportion to this lower supply current is necessarily or possibly transmitted. To be more precise if the maximal performance to make the IR LEDs operate is 300W and the duty cycle of impulses of the controller current pulse is 1/10 then the necessary average achievement to make LEDs operate is only 30W. (Apart from the losses) in case of a 12V power supply it would mean 2,5 A power but for example by a 36V power supply it would mean a transmission of 0,83A via twisted pairs. (In practice for example because of the power generator supply the maximum voltage of the LEDs is the previously mentioned 34V, supplying them with it by an performance of 30W it means 0,88 A power.) So it is worth increasing the outgoing voltage in the remote supply module before the transmission and in the camera module reducing the incoming voltage to the desired level. Increasing and reducing the voltage is possible with a two-way (reversible) capacitive voltage multiplier circuit. The conceptual sketches of these connections can be seen in Figs. 9. and 10.

In Fig. 9a,b a voltage duplicator or triplicator or dimidiator or trisector connection arrangement can be seen. In the figure through the serial connection of capacitors C1, C2 and C3 the serial connection of the capacitors C4 and C5 can be connected with changeover switches. In Fig. 9a in a higher position of the switch is, the C4 capacitor is in a parallel connection with C1 capacitor and the C5 capacitor is in a parallel connection with C2 capacitor. In figure 9b the changeover switch can be seen in a lower position, where the capacitor C4 is in a parallel connection with the capacitor C2 and the capacitor C5 is in a parallel connection with C3. As a result of the cyclic switch of the changeover switch the voltages U1-U5 of the capacitors C1-C5 are the same. As a consequence of it the same voltage appears on any other capacitors in case of a supply, so on the serial connection of C4 and C5 the duplex of supplied capacitors' voltage, in case of the serial connection of the capacitors C1, C2 and C3 the triplex of the supplied capacitor appears as an outgoing U6 voltage. In a reversed situation when we supply the serial connection of C4 and C5 half of the incoming voltage can be deduced on any capacitor. Just like this if we supply the serial connection of the capacitors C1, C2 and C3 then one third of the incoming voltage can be deduced on any capacitors. It's obvious if we supply the serial connection of the capacitors C4 and C5 then on the serial connection of the capacitors C1, C2 and C3 the two third of the incoming voltage can be deduced as U6. If we supply the serial connection of the capacitors C1, C2 and C3 then we can deduce the three half of the incoming voltage as U6. If we supply the serial connection of the capacitors C1, C2 C3 with U6 voltage then on the serial connection of C4 and C5 the two third of the incoming voltage can be deduced. Such kind of connection can be used in a camera module to trisect a 36V power supply in order to achieve the 12V, which is necessary to generate the adequate internal power supply.

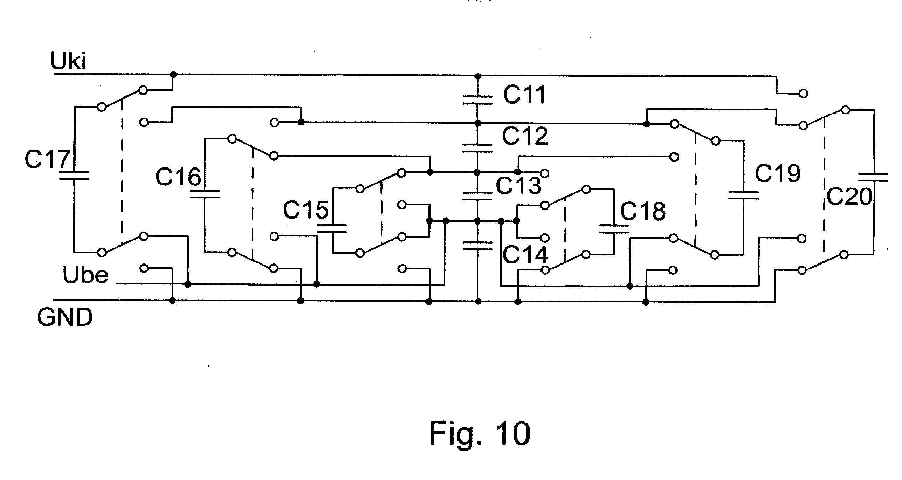

If we think of a battery with 12V supply voltage then in the remote supply module the multiplication of the voltage, the triplication or quadruplication of the voltage is necessary. As we mentioned earlier in order to be able to regulate the power supply it is higher on the supplying side, it means that for example a quadrupled voltage is necessary, which assures a significant regulating reserve. In Figure 10. the conceptual sketch of a voltage quadruplicator connection can be seen.

In the middle of Fig. 10 C1, C2, C3 capacitors' serial connection can be seen. The capacitors C15, C16 and C17 on the left side and the capacitors C18, C19 and C20 on the right side of the drawing can be attached to these through changeover switches. As it can be seen on the drawing, the capacitors C15 and C18 can be connected with capacitors C13 and C14 in parallel, but in opposite phase. When capacitor C15 is in parallel connection with capacitor C13 then capacitor C18 and C14 are in parallel connection and inversely. If capacitor C16 is in a position as in the drawing it is in parallel connection with capacitors C13 and C14's serial connection, and capacitor C19 is in parallel connection with C12 and C13's serial connection. By the switch-over of the switches, the role of C16 and C19 reverse. Likewise when capacitor C15 is in a position similar to the drawing then it's in parallel connection with capacitors C11, C12 and C13's serial connection while capacitor C20 is in parallel connection with capacitors C12, C13 and C14's serial connection. By the switch-over of the switches, the role of capacitor C17 and C20 reverse. Given by the connection arrangement the voltage U11-U14 on capacitors C11 and C14 are the same while on capacitors C15 and C18 single, on capacitors C16 and C19 duplex, on capacitors C17 C20 triplex voltage is specific. A different wiring technique - compared to Figure 9. - although requires a few more plus capacitors, but the formation in Figure 10. ensures (about six times) bigger performance and load. To quadruplicate the voltage in the remote supply module we can supply the capacitor with U14=12V input voltage while on the output Uki=U11+U12+U13+U14 we get four times bigger voltage. In this example in case of an input voltage 12V the Uki output voltage is 48V.

As a result of using a voltage multiplier like this the internal electronics of the camera and the remote power supply module has a low inductive emanation (no coil inside) that's why it doesn't require shielding protection, so it contributes to the video signal's better signal to noise ratio. It mends the procession of the quality and as a result of it assures a better and more reliable pattern recognition.

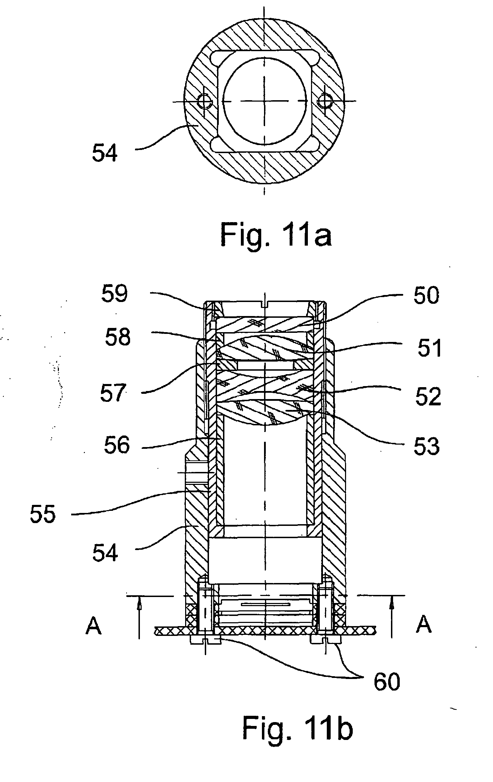

In Fig. 11 a structure arrangement of camera lens 10 or 15 degrees can be seen in side-view (11b) and bottom-view (11a) section. As the drawing shows the camera lens exists of three lenses (51, 52 and 53), so called triplets, which contains two convex lenses (51 and 53) and among them a concave lens (52). It can be achieved with the adequate sizing of these lenses that the two convex lenses are alike, which makes the producing and fixing of the camera lens, so it has a cost reducing effect. The triplets are placed in camera lens' internal case (55), where their position is determined by remote holder (56 and 58) and by narrowing aperture (57). What's more the narrowing aperture (57) fulfils the task of a remote holder, too. The narrowing aperture makes it possible that the camera lens obtains a picture adequate for the size of the CCD to the surface of the CCD. At the same time it secures that during the imaging only the bottom territory of the lenses participates, where the optical decomposition and imaging inaccuracies can be neglected. Above the remote holder (58) translucent and IR filter are placed (50), which are fixed with rings (59) in the internal case (55). The camera lens (55) cases are surrounded with external camera lens holder (54). In this threaded holes can be found to fix the camera lens. In the picture the camera lens is fixed with screws to the mounting plate (60). The optoelectronic converter in this case the CCD is placed inside the external camera lens holder.

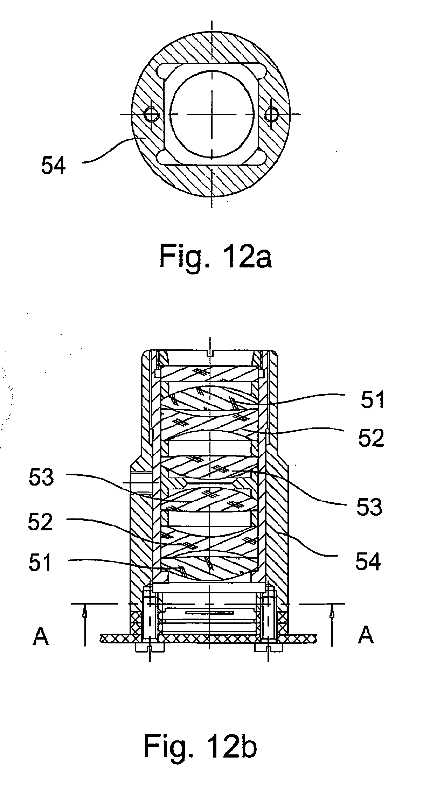

In Fig. 12 a camera lens 20 or 30 degrees can be seen in side-view section. The geometrical shape and distance of the lenses of the camera lens with 20 and 30 degrees are several but in a camera lens by the 6 lenses, which create the camera lens, (in this case double triplet) the two triplets correspond with each other and with the 10 and 15 degree arrangement.

Since by the shaping of the camera lens the structural elements correspond with the structural elements of showed example in the 5th figure, or similar to them. The structural elements with the same or similar function were indicated with the same reference signal. As it can be seen in the drawing the narrowing aperture is placed among the two triplets and the two triplets are symmetrical to the narrowing aperture in the internal camera lens case. The presented example of embodiment shows that from two identical lens kits four camera lenses with different angle of view, depth of field and luminous intensity can be prepared.

The resolution of the optical lens depends on how it can replicate a separate point to one pixel. The camera lens we use replicates a point to a territory, whose diameter is 4-5 µm. It means on a 1/3 coll camera (8,5mm) about 2000 pixel resolution. The resolution in the bottom of the camera lens is better on the edge of it it's worse, that's why a narrowing aperture should be used inside the camera lens in order to avoid bad resolution on the edge of the CCD.

By the optical lens arrangement according to the invention the aperture on the principal plane is wider than the diameter of some of the lenses. The principal plane is a virtual plane, which is specific for the lens system, so the complicated camera lens can be replaced with it for certain calculations. The incoming light in parallel with the first lens is turned to a convergent beam by the camera lens, where this convergent beam closes in one point that's the focal point. If we elongate the two incoming and the two adequate outgoing parallel rays (which still take part in replication) toward the inner part of the optical lens then the intersection of the two-two beam paths gives the terminal point of the principal plane. The distance of the focal point and the principal plane is the focal length (F), the aperture (A) counted on the principal plane is the height of the principal plane. The luminous intensity can be counted as the quotient of F/A. If the principal plane is among the geometric central of the camera lens and the first lens (where the light comes in) then it's virtually bigger than the lenses and the size determined by the narrowing aperture. That's why it is practical to choose a camera lens like this. As the aperture of the principal plane is bigger than the diameter of the lenses, therefore big luminous intensity can be achieved even with small size.

The camera lens with an angle of view 20 degrees: the length measured by the optical axis 25,44mm (focal length 16,3mm), lens diameter 13mm (diaphragm diameter 6mm), luminous intensity 2,7. The camera lens with an angle of view 10 degrees: the length measured by the optical axis 11,5mm (focal length 29,7mm), lens diameter: 13mm (diaphragm diameter 7,5mm), luminous intensity: 3,7.

The camera lens with an angle of view 30 degrees: the length measured by the optical axis 17,6mm (focal length 11,56mm), lens diameter: 8mm (diaphragm diameter 5mm), luminous intensity: 2,33.

## Claims

1. Combined pattern recognizing camera, especially for the recognition of license plates, the camera comprising at least one optical imaging component, an optoelectronic image converter attached to this and an electronic control module, wherein the optical imaging component has a narrow angle of view (10/20/30 degrees) with a large depth of field (3.4) and generates a sharp image from a minimum distance 4/2.5/1m to infinity.

2. The camera of claim 1, **characterised by** the optical imaging component that has a narrow angle of view at most 20 degrees and generates a sharp image from a minimum distance of 2.5m to infinity with a large depth of field (3.4).

3. The camera according to claim 1, **characterised by** the optical imaging component that has a narrow angle of view at most 30 degrees and generates a sharp image from a minimum distance of 1m to infinity with a large depth of field (3.4)

4. The camera of any of claims 1 to 3, **characterised by** the optical imaging component comprising a three lens (51, 52, 53) camera lens, preferably a triplet or a gauss optics.

5. The camera of any of claims 1 to 3, **characterised by** the optical imaging component comprising a six lens (51, 52, 53) camera lens, preferably a double triplet or a double gauss optics.

6. The camera of any of claims 1 to 5, **characterised by** the camera being placed in a common case (1) with an electric module, wherein on the front of the common case an appropriate sized aperture is formed (13) for the camera lens (3,4) and on the free space next to this IR LEDs are placed.

7. The camera of claim 6, **characterised by** that the electric module and the power supply module for the IR LEDs are placed outside of the camera case (1) in a remote power supply unit (35) which connects to the camera case through twisted pair cables.

8. The camera of claim 7, **characterised by** that the cable (36) connecting the power supply module (35) and the case of the camera (1) contains standard twisted pair cables and besides the power supply video signals and other communication signals are transferred via this.

9. The camera of claim 7, **characterised by** that the voltage provided by the remote power supply for the camera equals to the sum of the voltage necessary for the camera and the highest voltage which ensures the remote power supply of the camera, furthermore the remote power supply contains a variable serial resistance element to secure the permanent outgoing camera voltage.

10. The camera of claim 9, **characterised by** that the remote power supply's variable resistance element is a power transistor, the control electrode of which receives a variable reverse voltage, in accordance with the load.

11. The camera of claim 6, **characterised by** that the IR LEDs are connected in series with a current generator and with this serial connection energy storing and low noise filter capacitors are connected in parallel.

12. The camera of claim 11, **characterised by** that the energy storing capacitor is a low resistance capacitor which has a constant charging current generator attached to it.

13. The camera of claim 9, **characterised by** that a voltage multiplier circuit is provided in the remote power supply and in the camera unit a voltage divider circuit is employed.

14. The camera of claim 11, **characterised by** that the voltage multiplier circuit arranged in the remote power supply is a voltage quadruplicator circuit.

15. The camera of claim 11, **characterised by** that the voltage divider circuit arranged in the camera unit is a voltage trisects circuit.
